# EUROPÄISCHE PATENTSCHRIFT

(11) **EP 2 352 409 B1**
(45) Veröffentlichungstag und Bekanntmachung des Hinweises auf die Patenterteilung: **08.07.2015**
(21) Anmeldenummer: 09778357.5
(22) Anmeldetag: 05.09.2009
(51) Int. Cl.: A47L 9/20, B01D 46/00

(54) **FILTERABREINIGUNG IN EINEM SCHMUTZSAUGER MIT KLAPPENELEMENT**
FILTER CLEANING IN A VACUUM HAVING A FLAP ELEMENT
NETTOYAGE DE FILTRE DANS UN ASPIRATEUR DE SALETÉS AVEC ÉLÉMENT À CLAPET

(30) Priorität: 13.09.2008 DE 102008047047
(43) Veröffentlichungstag der Anmeldung: 10.08.2011
(73) Patentinhaber: Nilfisk-Advance A/S, 2605 Bröndby (DK)
(72) Erfinder: KIENZLE, Martin, 89986 Illerieden (DE); WERBACH, Günther, 89264 Weissendorn (DE); HAFENRICHTER, Rainer, 89290 Buch (DE); DIETZ, Klaus, 89079 Ulm (DE)
(74) Vertreter: Riebling, Peter
(86) Internationale Anmeldenummer: PCT/EP2009/006461
(87) Internationale Veröffentlichungsnummer: WO 2010/028787

(56) Entgegenhaltungen:
- EP-A- 1 092 382
- DE-U1-202007 015 242
- US-A1- 2007 067 944

## Beschreibung

Gegenstand der Erfindung ist ein Schmutzsauger mit einer Filterabreinigung und einem Klappenelement nach dem Oberbegriff des Anspruches 1.

Das Grundprinzip der Filterabreinigung besteht darin, dass die jeweilige Filterkammer mit der zu reinigenden Filterhälfte zunächst vom Saugluftstrom der Saugturbine abgetrennt wird und dann nachfolgend ein Falschluftstrom, der aus dem Ausblasstrom der Saugturbine gewonnen wird, in die Filterkammer impulsartig eingeleitet wird, um deren außen mit Schutzteilen belastete Fläche von innen nach außen gerichtet zu reinigen.

Eine solche Filterabreinigung ist mit dem älteren Patent DE 199 49 095 C2 der Anmelderin bekannt. Die Steuerung des Falschluftstromes erfolgt dergestalt, dass durch Ausnutzen von Druckunterschieden zwischen dem Saugluftstrom und dem Atmosphärendruck ein in einem Gehäuse angeordnetes, etwa X-förmig ausgestaltetes Klappenelement schlagartig seine Position ändert und eine oder mehrere Öffnungen in dem Gehäuse öffnet und/oder verschließt, so dass der Falschluftstrom impulsartig an die eine, abzureinigende Filterhälfte gelangt, während die andere Filterhälfte im Saugluftstrom verbleibt.

Nachdem der Luftimpuls auch zur Umschaltung des Klappenelementes verwendet wird, geht deshalb Energie für die Abreinigung verloren. Dies vermindert die Impulsstärke des Abluftreinigungsstoßes.

Die EP 1 118 303 A2 zeigt eine gleichartige, druckgesteuerte Umschaltung des Klappenelementes, was mit den gleichen Nachteilen verbunden ist.

In der DE 101 01 219 B4 ist eine Umschaltung von einem Abreinigungsluftstrom in einen Saugluftstrom durch zwei elektromagnetisch angesteuerte Drei-WegeVentile beschrieben. Wegen der Verwendung von zwei getrennt angesteuerten Drei-Wege-Ventilen, die in voneinander getrennten Kammern angeordnet sind, ergibt sich jedoch ein hoher baulicher Aufwand für die Kammerkonstruktion und die Ansteuerung der Ventile.

US 2007/0067944 A1 offenbart Schmutzsauger mit einer Filterabreinigung und einem umschaltbaren Klappenelement, wobei die Abreinigung des Filters oder Teilen des Filters durch Zufuhr eines Falschluftstromes auf die Innenseite des abzureinigenden Filters erfolgt. Die Filter sind abgedichtet voneinander getrennt im Schmutzsaugerbehälter von außen nach innen durchströmt. Ein in einem Kammergehäuse angeordnetes Klappenelement ist verschwenkbar, wobei mit dessen Verschwenkung Öffnungen verschlossen und freigegeben werden, wobei der Falschluftstrom impulsartig an die abzureinigende Fläche des Filters von innen nach außen gelangt. Das Klappenelement besteht aus mindestens zwei Teilklappen, deren Verschwenkung von einem Schwenkantrieb beaufschlagt ist.

Der Erfindung liegt ausgehend von der US 2007/00667944 A1 die Aufgabe zugrunde, eine zuverlässige Abreinigung der beiden Filterhälften eines Schmutzsaugers zu gewährleisten, wobei ein besserer Abreinigungswirkungsgrad gegeben ist.

Die Lösung der gestellten Aufgabe erfolgt durch die Merkmale des Patentanspruches 1.

Erfindungsgemäß wird nun ein etwa Y-förmiges Klappenelement, bestehend aus zwei im Winkel zueinander angeordneten Klappenteilen, durch einen kostengünstigen Servomotor-Antrieb angesteuert. Nachdem solche Servomotoren vielfältig im Modellbau eingesetzt sind, können diese kostengünstig für die Zwecke der Erfindung verwendet werden

In einer bevorzugten Ausführung hat der Servomotor einen Antriebsarm, der in eine zugeordnete U-förmige Aufnahme an einem Ansatz des Klappenelementes angreift und dieses in die eine oder andere Schwenkstellung bringt. Es gibt insgesamt drei verschiedene Schwenkstellungen, nämlich eine mittige Stellung des Klappenelementes, eine linke und eine rechte.

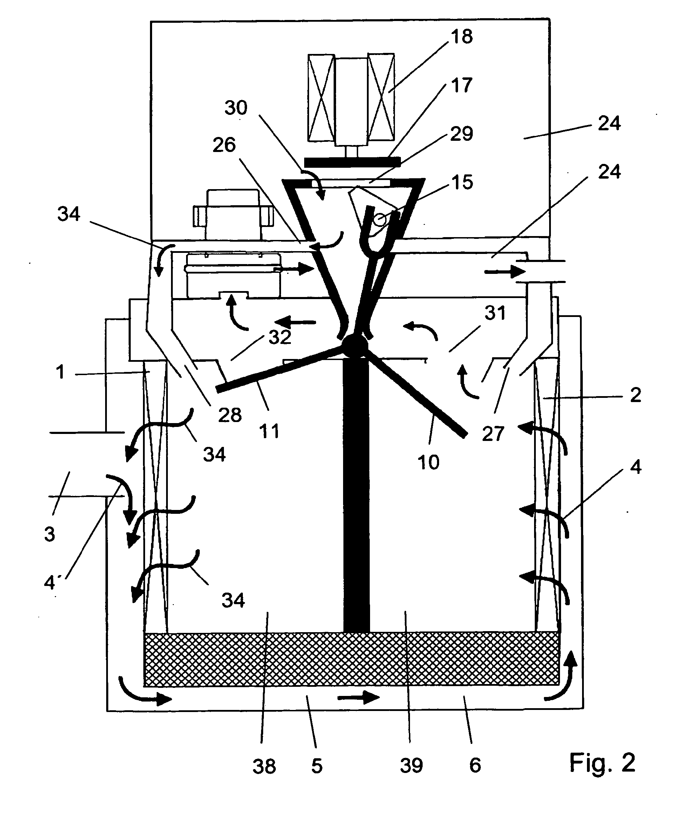

Bei der mittigen Stellung werden beide Filterhälften von dem Schmutzstrom beströmt und sind deshalb beide in Funktion, während bei der rechten Schwenkstellung (Figur 2) lediglich die rechte Filterhälfte in Funktion bleibt und den Schmutzstrom abreinigt, während die linke Filterhälfte von der impulsartig erzeugten Rückströmung in Gegenrichtung zur Schmutzreinigungsrichtung abgereinigt wird.

Der Abluftreinigungsstrom wird durch die schlagartige Öffnung einer Steuerklappe oder einer Steueröffnung induziert, wobei für die Ansteuerung dieser Steuerklappe ein elektromagnetisch betätigter Hubmagnet verwendet wird.

Zum Stand der Technik im Vergleich zur vorliegenden Erfindung wird noch Folgendes ausgeführt:
Während die bekannte X-Klappe nicht zwangsgesteuert war, sondern vom einströmenden Luftstrom umgestellt wurde, handelt es sich bei der vorliegenden Y-Klappe um eine elektromotorisch betätigte Klappe. Damit besteht der Vorteil, dass man bei einer Filterhälfte mehrere Reinigungsimpulse nacheinanderfolgend auf diese Filterhälfte aufgeben kann und damit eine bessere Abreinigung dieser Filterhälfte erzielt. Es handelt sich demnach um eine zwangsgesteuerte Umschaltung zwischen der einen und der anderen Filterhälfte.

Die Erfindung zeichnet sich dadurch aus, dass ein elektromotorisch, elektromagnetisch oder in anderer Weise willkürlich ansteuerbares Klappenelement in drei verschiedene Schwenkstellungen bringbar ist und hierbei eine Neutralstellung gegeben ist, bei der beide Filterhälften in Betrieb sind. Ferner zeichnet sich die Erfindung dadurch aus, dass durch die Umschaltung mittels des elektromotorischen Antriebes jeweils wahlweise die eine oder die andere Filterhälfte abgereinigt werden kann.

Weiterer Vorteil der Erfindung ist, dass für die Klappensteuerung der Abreinigungsluft ein einziger Elektromagnet vorhanden ist, der diese einzige Klappe betätigt, während beim Stand der Technik zwei unterschiedliche Elektromagneten mit zwei unterschiedlichen Klappen vorhanden waren.

Der Vorteil hierbei liegt darin, dass entsprechend der Schwenkstellung der Y-Klappe wahlweise die Abreinigungsluft der einen oder anderen Filterhälfte schlagartig impulsförmig und mehrfach hintereinander zugeführt werden kann, was beim Stand der Technik nicht der Fall war.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert einen Schnitt durch einen Schmutzsauger nach der Erfindung in einer neutralen Klappenstellung bei der Beaufschlagung beider Filterhälften
- Figur 2:: ein Schnitt gemäß Figur 1 mit der Abreinigung der linken Filterhälfte
- Figur 3:: ein Schnitt gemäß Figur 1 mit der Abreinigung der rechten Filterhälfte
- Figur 4:: schematisiert die Darstellung des Filters mit den Betätigungselementen und der Saugturbinen

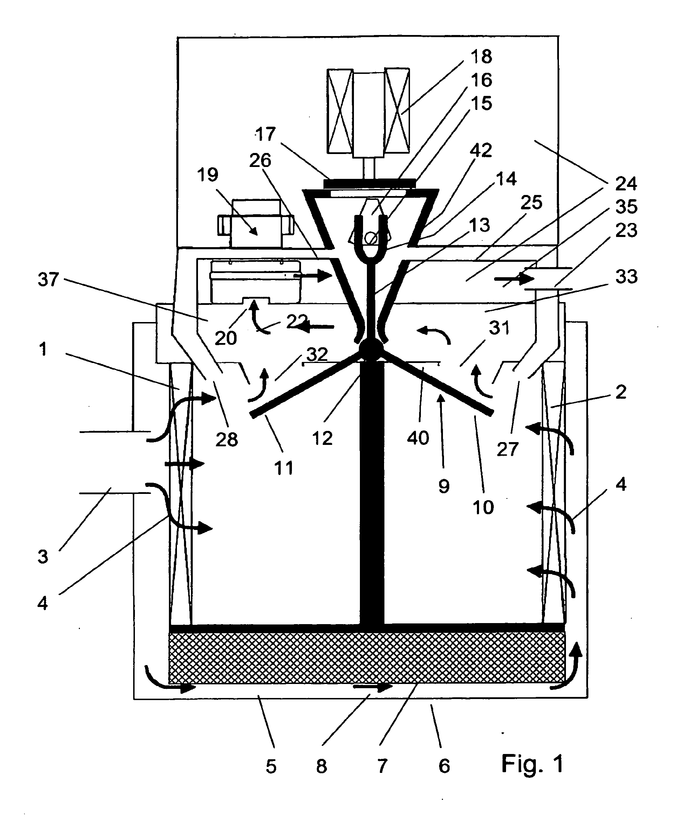

In Figur 1 ist allgemein ein Schmutzsauger dargestellt, der aus einem Behälter 6 besteht, in dem abdichtend eine Filteranordnung, bestehend aus einem Ringfilter, eingesetzt ist, wobei der Ringfilter aus zwei Filterhälften 1, 2 besteht. Die Filterhälften 1, 2 sind voneinander abgedichtet und sind entweder parallel zu betreiben, oder es kann die eine Hälfte abgereinigt und die andere Filterhälfte weiterbenutzt werden.

In den Behälter 6 mündet ein Ansaugstutzen 3, über den die Ansaugluft in Pfeilrichtung 4 einströmt und hierbei - in der neutralen Stellung der Figur 1 - beide Filterhälften 1, 2 in den Pfeilrichtungen 4 durchströmt.

Es ist dargestellt, dass sich die Luft vom Ansaugstutzen 3 über den Bodenraum 5 des Behälters 6 auch ringförmig verteilt und deshalb auch die rechte Filterhälfte 2 durchströmt. Die Luftströmung erfolgt hierbei in Pfeilrichtung 8. Der Behälter 6 ist der zeichnerischen Vereinfachung wegen sehr kurz und mit geringem Volumen gezeichnet. Er kann auch als Sack oder als sehr großer Behälter ausgebildet sein, wobei wichtig ist, dass der gesamte Ringfilter im Bereich einer bodenseitigen Abdichtung 7 gefasst ist, um einen inneren Filterraum zu schaffen.

Das erfindungsgemäße Umschaltelement besteht aus einer Y-Klappe 9, die aus beiden im Winkel zueinander angeordneten Teilklappen 10, 11 besteht, die starr miteinander verbunden sind und im Bereich eines Schwenklagers 12 schwenkbar gelagert sind. Am Schwenklager 12 schließt drehfest ein Hebel 13 an, der in einer oberen, nach oben offenen Gabel 14 mündet.

Der Hebel 13 mit der Gabel 14 greift abgedichtet in ein Kammergehäuse 42 ein, durch welches die impulsartig erzeugte Abreinigungsluft hindurch fließt.

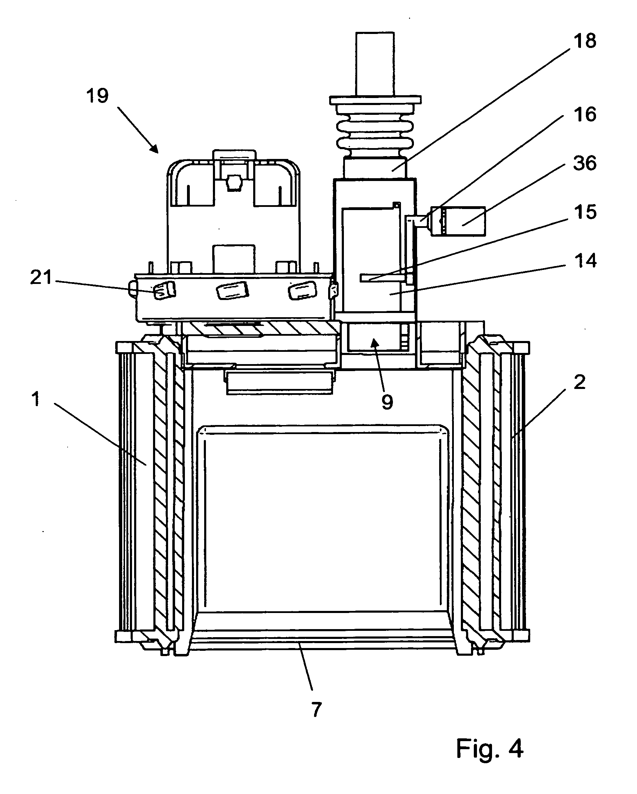

Die Antriebsachse des Servomotors 36 (siehe Figur 4) ist drehfest mit einem Betätigungsstift 15 verbunden, der an einem Schwenkteil angeordnet ist, welches in einem Drehpunkt 16 schwenkbar am Gehäuse des Schmutzsaugers gelagert ist.

Der Betätigungsstift 15 greift in die Gabel 14 ein und ist durch Schwenkbetätigung des Hebels 13 in der Lage, die Y-Klappe aus einer neutralen Stellung nach der einen oder anderen Seite zu verschwenken.
Damit wird jeweils die eine Teilklappe 10 oder andere Teilklappe 11 zur Abdichtung an den Ausströmöffnungen 31, 32 gebracht.

Als Betätigung für die Impulsklappe 17 wird ein Hubmagnet 18 verwendet, der jedoch auch in anderen Ausgestaltungen als gleichwirkendes, anderes Element ausgebildet sein kann. Der Hubmagnet 18 kann beispielsweise durch einen Servomotor ersetzt werden oder durch ein anderes, impulsartig arbeitendes Betätigungselement.

In der gezeigten neutralen Stellung der Figur 1 sind somit beide Filterhälften 1,2 in Funktion. Die schmutzbeladene Luft strömt in den Pfeilrichtungen 4 durch beide

Filterhälften 1, 2 und die dort definierten Filterkammern 38, 39 hindurch und strömt durch die beiden Ausströmöffnungen 31, 32 hindurch, weil die beiden Teilklappen 10, 11 die beiden Ausströmöffnungen 31, 32 freigeben. Die Ausströmöffnungen 31, 32 sind luftführender Teil eines Sammelkanals 37, so dass die über die beiden Öffnungen 31, 32 einströmende Luft in Pfeilrichtung 22 von der Ansaugöffnung 20 der Saugturbine 19 angesaugt wird, dort verdichtet wird und in der eingezeichneten Pfeilrichtung 35 die Ausblasöffnung 21 verlässt. Somit wird die in die Filterkammer 38, 39 einströmende Luft in Pfeilrichtung 22 von der Saugturbine 19 über deren Ansaugöffnung 20 angesaugt.

Die Saugturbine 19 fördert die aus den Filterkammern 38, 39 angesaugte Luft unter Überdruck in einen Überdruckraum 24. Die so verdichtetet Reinluft wird über den Ausblaskanal 23 nach außen befördert.

Es versteht sich von selbst, dass im Rahmen der vorliegenden Erfindung es auch vorgesehen sein kann, dass die Luft in der Pfeilrichtung 35 auch zur Kühlung der Saugturbine 19 verwendet werden kann. Es kann jedoch auch eine separate Kühlung des Motors vorgesehen werden.

Der Überdruckraum 24 ist im Übrigen durch eine Wand 33 von dem Unterdruckraum des Schmutzsaugers getrennt.

Nachdem im gesamten Überdruckraum 24 Überdruck herrscht, wird dieser in der neutralen Stellung der Impulsklappe 17 nicht in den Filterinnenraum eingeleitet. Der Hubmagnet 19 hält nämlich die Impulsklappe 17 abgedichtet unter Federlast auf der zugeordneten Öffnung 29 im Kammergehäuse 42. Demzufolge ist auch keine Impulsluft in den vom Kammergehäuse 42 abzweigenden Impulskanälen 25, 26 vorhanden.

Wird hingegen gemäß Figur 2 durch Ansteuerung des Servomotors 36 der Betätigungsstift 15 in die eine (rechte) Schwenkstellung verschwenkt, dann verschließt die Teilklappe 11 die Ausströmöffnung 32 und erst nach vollständigem Verschluss der Ausströmöffnung 32 wird der Hubmagnet 18 betätigt, so dass die Impulsklappe 17 schlagartig von der Öffnung 29 freikommt und die in dem Überdruckraum 24 gesammelte Überdruckluft nun schlagartig über die Öffnung 29 in Pfeilrichtung 30 nach unten in die Kammer 42 strömt und hierbei in den Kanal 26 eintritt, der die Impulsluft in Pfeilrichtung 34 in den linken Schmutzsaugerraum einströmen lässt und in Pfeilrichtung 34 von innen nach außen gerichtet die linke Filterhälfte 1 durchströmt und diese damit abreinigt. Die Gabel 14 kann hierbei die andere, gegenüberliegende Öffnung zum Impulskanal 25 abdichtend verschließen.

Wichtig ist, dass bei geschlossener Teilklappe 11 der Hubmagnet beliebig oft die Impulsklappe 17 betätigen kann, um so schlagartig mehrere Impulsstöße nacheinander folgend in den Pfeilrichtungen 34 gegen die Innenseite der Filterhälfte 1 zu lenken und mit großem Wirkungsgrad abzureinigen.

Die Abreinigungsluft strömt somit über die Ausblasöffnung 28 in den Innenraum des Filters.

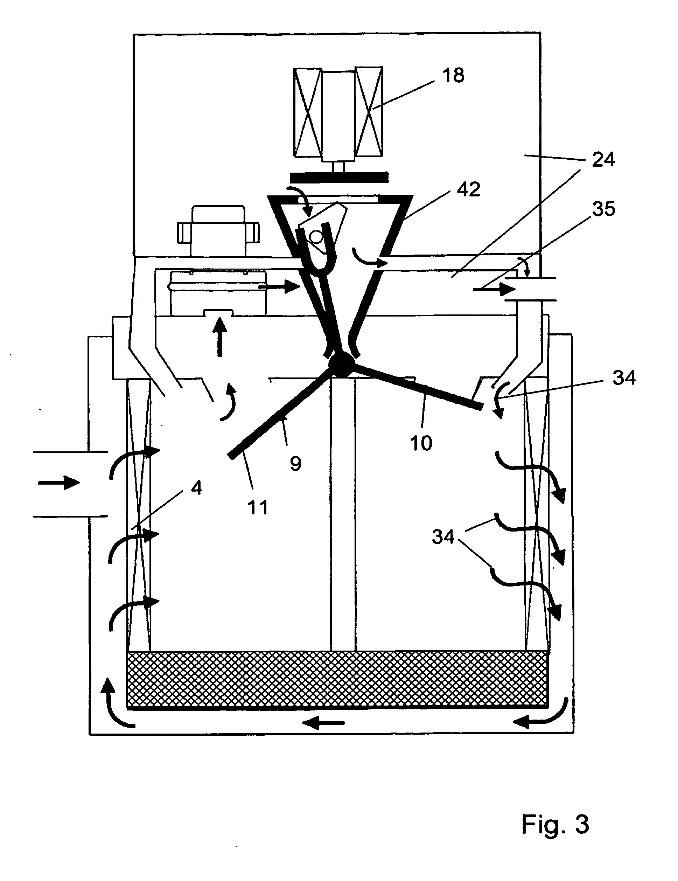

Wird hingegen gemäß Figur 3 die Y-Klappe 9 umgeschaltet, strömt die Ausblasluft oder Reinigungsluft durch die rechte Ausblasöffnung 27 nach unten, und es folgt der gleiche Abreinigungsvorgang der rechten Filterhälfte 2.

Die Figur 4 zeigt noch weitere Einzelheiten des Antriebs, wo dargestellt ist, dass im oberen Überdruckraum 24 der Servomotor 36 angeordnet ist, dessen Antriebsachse über einen Hebel mit dem Betätigungsstift 15 verbunden ist.

Im vorstehend beschriebenen Ausführungsbeispiel wurde die Abreinigung von zwei Teilfiltern (1, 2) beschrieben. Die Erfindung bezieht sich jedoch auch auf die Abreinigung von drei oder mehr Teilfiltern. Alle vorstehend gegebenen Erläuterungen sind dann in analoger Weise zu verstehen.

**Zeichnungslegende**

| | | | |
|---|---|---|---|
| 1 | Filterhälfte | 22 | Pfeilrichtung |
| 2 | Filterhälfte | 23 | Ausblaskanal |
| 3 | Ausgangsstutzen | 24 | Überdruckraum |
| 4 | Pfeilrichtung 4' | 25 | Impulskanal |
| 5 | Bodenraum | 26 | Impulskanal |
| 6 | Behälter | 27 | Ausblasöffnung |
| 7 | Abdichtung | 28 | Ausblasöffnung |
| 8 | Pfeilrichtung | 29 | Öffnung |
| 9 | Y-Klappe | 30 | Pfeilrichtung |
| 10 | Teilklappe | 31 | Ausströmöffnung |
| 11 | Teilklappe | 32 | Ausströmöffnung |
| 12 | Schwenklager | 33 | Wand |
| 13 | Hebel | 34 | Pfeilrichtung |
| 14 | Gabel | 35 | Pfeilrichtung |
| 15 | Betätigungsstift | 36 | Servomotor |
| 16 | Drehpunkt | 37 | Sammelkanal |
| 17 | Impulsklappe | 38 | Filterkammer |
| 18 | Hubmagnet | 39 | Filterkammer |
| 19 | Saugturbine | 40 | |
| 20 | Ansaugöffnung | 41 | |
| 21 | Ausblasöffnung | 42 | Kammergehäuse |

## Patentansprüche

1. Schmutzsauger mit einer Filterabreinigung und einem umschaltbaren Klappenelement, wobei die Abreinigung des Filters oder Teilen des Filters durch Zufuhr eines Falschluftstromes auf die Innenseite des abzureinigenden Filters erfolgt, und die Filter (1,2) abgedichtet voneinander getrennt im Schmutzsaugerbehälter (6) von außen nach innen durchströmt sind und ein in einem Kammergehäuse (42) angeordnetes Klappenelement (9) verschwenkbar ist, mit dessen Verschwenkung Öffnungen (31, 32) verschlossen und freigegeben werden, wobei der Falschluftstrom impulsartig an die abzureinigende Fläche des Filters (1, 2) von innen nach außen gelangt, wobei das Klappenelement (9) aus mindestens zwei Teilklappen (10, 11) besteht, deren Verschwenkung von einem Schwenkantrieb (15, 36) beaufschlagt ist, **dadurch gekennzeichnet, dass** die jeweilige Teilklappe (10, 11) wahlweise die Ausströmöffnung (31, 32) der jeweiligen Filterkammer (38, 39) in Richtung zur Ansaugöffnung (20) der Saugturbine (19) verschließt,
dass die Ausblasseite der Saugturbine (19) die erzeugt Überdruckluft in einen Überdruckraum (24) fördert, in dem ein Kammergehäuse (42) angeordnet ist, das mindestens eine durch ein schlagartig betätigbares Antriebselement (18) zu öffnende und schließende Öffnung (29) aufweist, bei deren Öffnung die Überdruckluft durch das Kammergehäuse (42) wahlweise in einen jeweils dort abzweigenden Impulskanal (25, 26) einströmt, der diese zur Abreinigung in die eine oder andere Filterkammer (38, 39) einleitet.

2. Schmutzsauger mit einer Filterabreinigung nach Anspruch 1, **dadurch gekennzeichnet, dass** an der Oberseite der Filterkammern (38, 39) eine Wand (40) angeordnet ist, die von den Ausströmöffnungen (31, 32) durchbrochen ist und dass die Ausströmöffnungen (31, 32) in einen Sammelkanal (37) münden, in dem die Ansaugluft für die Saugturbine (19) geführt ist.

3. Schmutzsauger mit einer Filterabreinigung nach Anspruch 1 und 2, **dadurch gekennzeichnet, dass** der Sammelkanal (37) nach oben durch eine weitere Wand (33) begrenzt ist, auf deren anderen Seite der Überdruckraum (24) zur Führung der Ausblasluft der Saugturbine (19) angeordnet ist.

4. Schmutzsauger mit einer Filterabreinigung nach einem der Ansprüche 1 bis 3, **dadurch gekennzeichnet, dass** im Überdruckraum (24) etwa fluchtend zur Mittenlängsachse des Filters (1, 2) ein Kammergehäuse (42) angeordnet ist, dessen Innenraum luftschlüssig mit dem Überdruckraum (24) verbindbar ist, und dass im Innenraum des Kammergehäuses (42) ein drehfest mit der Y-Klappe (9) verbundener Hebel (13) angeordnet ist, an dem die Schwenkbetätigung für die Y-Klappe (9) angreift.

5. Schmutzsauger mit einer Filterabreinigung nach Anspruch 4, **dadurch gekennzeichnet, dass** am Hebel (13) eine Gabel (14) ansetzt, in welche der Betätigungsstift (15) des Schwenkantriebes eingreift.

6. Schmutzsauger mit einer Filterabreinigung nach Anspruch 4 und 5, **dadurch gekennzeichnet, dass** der sich Hebel (13) und/oder die Gabel (14) abdichtend wahlweise an der einen oder anderen Auslassöffnung des Kammergehäuses (42) anlegt, wobei die Auslassöffnung jeweils in einen Impulskanal (25, 26) mündet, der in den Innenraum der Filterkammer (38, 39) gerichtet ist.

7. Schmutzsauger mit einer Filterabreinigung nach einem der Ansprüche 1 bis 6, **dadurch gekennzeichnet, dass** als Schwenkantrieb für die Y-Klappe (9) ein Servomotor (36) dient.

8. Schmutzsauger mit einer Filterabreinigung nach einem der Ansprüche 1 bis 7, **dadurch gekennzeichnet, dass** die Luftzuführung des Kammergehäuses (42) zum Überdruckraum (24) durch eine Impulsklappe (27) verschließbar ist, deren Hub von einem Hubmagneten (18) gesteuert ist.

9. Schmutzsauger mit einer Filterabreinigung nach einem der Ansprüche 1 bis 7, **dadurch gekennzeichnet, dass** am Kammergehäuse (42) das Schwenklager für die Y-Klappe (9) angeordnet ist.

## Claims

1. Suction cleaner with a filter cleaning device and a switchable flap element, wherein the cleaning of the filter or parts of the filter takes place by supplying a false air flow onto the inside of the filter to be cleaned, and the air flows through the filters (1, 2), which are sealed from one another, separately in the suction cleaner container (6) from the outside to the inside and a flap element (9) arranged in a chamber housing (42) is pivotable, openings (31, 32) being closed and uncovered upon the pivoting of said flap element, wherein the false air flow arrives in a pulse-like manner from the inside to the outside on the face of the filter (1, 2) to be cleaned, wherein the flap element (9) consists of at least two part flaps (10, 11), the pivoting of which is driven by a pivot drive (15, 36), **characterised in that** the respective part flap (10, 11) selectively closes the outflow opening (31, 32) of the respective filter chamber (38, 39) in the direction of the intake opening (20) of the suction turbine (19), **in that** the out-blowing side of the suction turbine (19) conveys the excess pressure air produced into an excess pressure chamber (24), in which a chamber housing (42) is arranged, which has at least one opening (29), which is to be opened and closed by an abruptly actuable drive element (18) and upon the opening of which the excess pressure air selectively flows into a pulse channel (25, 26) branching off there, in each case, through the chamber housing (42), said channel guiding the excess pressure air into the one or other filter chamber (38, 39) for cleaning.

2. Suction cleaner with a filter cleaning device according to claim 1, **characterised in that** a wall (40), which is broken through by the outflow openings (31, 32), is arranged at the upper side of the filter chambers (38, 39) and **in that** the outflow openings (31, 32) open into a collecting channel (37), in which the intake air for the suction turbine (19) is guided.

3. Suction cleaner with a filter cleaning device according to claim 1 and 2, **characterised in that** the collecting channel (37) is upwardly limited by a further wall (33), on the other side of which is arranged the excess pressure chamber (24) to guide the out-blowing air of the suction turbine (19).

4. Suction cleaner with a filter cleaning device according to any one of claims 1 to 3, **characterised in that** a chamber housing (42), the interior of which can have an air connection to the excess pressure chamber (24), is arranged in the excess pressure chamber (24) approximately aligning with the centre longitudinal axis of the filter (1, 2), and **in that** a lever (13) that is non-rotatably connected to the Y-flap (9) is arranged in the interior of the chamber housing (42), the pivot actuation for the Y-flap (9) engaging on said lever.

5. Suction cleaner with a filter cleaning device according to claim 4, **characterised in that** a fork (14) is positioned on the lever (13), the actuating pin (15) of the pivot drive engaging in said fork.

6. Suction cleaner with a filter cleaning device according to claim 4 and 5, **characterised in that** the lever (13) and/or the fork (14) rest in a sealing manner selectively on the one or other outlet opening of the chamber housing (42), the outlet opening in each case opening into a pulse channel (25, 26), which is directed into the interior of the filter chamber (38, 39).

7. Suction cleaner with a filter cleaning device according to any one of claims 1 to 6, **characterised in that** a servomotor (36) is used as the pivot drive for the Y-flap (9).

8. Suction cleaner with a filter cleaning device according to any one of claims 1 to 7, **characterised in that** the air supply of the chamber housing (42) to the excess pressure chamber (24) can be closed by a pulse flap (27), the lift of which is controlled by a lifting magnet (18).

9. Suction cleaner with a filter cleaning device according to any one of claims 1 to 7, **characterised in that** the pivot bearing for the Y-flap (9) is arranged on the chamber housing (42).

## Revendications

1. Aspirateur de saletés avec un nettoyage de filtre et un élément à clapet réversible, étant précisé que le nettoyage du filtre ou de parties du filtres se fait grâce à l'amenée d'un courant d'air parasite sur le côté intérieur du filtre à nettoyer, et que les filtres (1, 2) sont traversés de l'extérieur vers l'intérieur dans le récipient d'aspirateur (6) en étant séparés l'un de l'autre de manière étanche, et qu'un élément à clapet (9) disposé dans un boîtier de chambre (42) est apte à pivoter, son pivotement provoquant la fermeture et le dégagement d'ouvertures (31, 32), étant précisé que le courant d'air parasite arrive par impulsions jusqu'à la surface à nettoyer du filtre (1, 2), de l'intérieur vers l'extérieur, étant précisé que l'élément à clapet (9) se compose de deux parties de clapet (10, 11) dont le pivotement est commandé par un entraînement de pivotement (15, 36),
**caractérisé en ce que** la partie de clapet correspondante (10, 11) ferme sélectivement l'orifice de sortie (31, 32) de la chambre de filtre correspondante (38, 39) en direction de l'orifice d'aspiration (20) de la turbine d'aspiration (19),
**en ce que** le côté décharge de la turbine d'aspiration (19) refoule l'air à surpression produit dans un espace de surpression (24) dans lequel est disposé un boîtier de chambre (42) qui présente au moins une ouverture (29) qui doit être ouverte et fermée par un élément d'entraînement (18) apte à être actionné brusquement, et dont l'ouverture provoque l'entrée de l'air à surpression, par le boîtier de chambre (42), sélectivement dans un conduit d'impulsion (25, 26) qui part de cet endroit et qui introduit l'air à surpression dans l'une ou l'autre des chambres de filtre (38, 39) en vue du nettoyage.

2. Aspirateur de saletés avec un nettoyage de filtre selon la revendication 1, **caractérisé en ce qu'**il est prévu sur le côté supérieur des chambres de filtre (38, 39) une paroi (40) qui est traversée par les ouvertures de sortie (31, 32), et **en ce que** les ouvertures de sortie (31, 32) débouchent dans un conduit collecteur (37) dans lequel est guidé l'air d'aspiration pour la turbine d'aspiration (19).

3. Aspirateur de saletés avec un nettoyage de filtre selon les revendications 1 et 2, **caractérisé en ce que** le conduit collecteur (37) est délimité vers le haut par une autre paroi (33) sur l'autre côté de laquelle est disposé l'espace de surpression (24) pour guider l'air de décharge de la turbine d'aspiration (19).

4. Aspirateur de saletés avec un nettoyage de filtre selon l'une des revendications 1 à 3, **caractérisé en ce qu'**il est prévu dans l'espace de surpression (24), à peu près dans l'alignement de l'axe longitudinal médian du filtre (1, 2), un carter de chambre (42) dont l'intérieur est apte à être relié de manière étanche à l'air à l'espace de surpression (24), et **en ce qu'**il est prévu à l'intérieur du boîtier de chambre (42) un levier (13) qui est relié, fixe en rotation, au clapet en Y (9) et sur lequel agit l'actionnement pivotant pour ledit clapet en Y (9).

5. Aspirateur de saletés avec un nettoyage de filtre selon la revendication 4, **caractérisé en ce que** sur le levier (13) est rapportée une fourche (14) dans laquelle pénètre la tige d'actionnement (15) de l'entraînement de pivotement.

6. Aspirateur de saletés avec un nettoyage de filtre selon les revendications 4 et 5, **caractérisé en ce que** le levier (13) et/ou la fourche (14) s'appliquent de manière étanche sélectivement contre l'une ou l'autre des ouvertures de sortie du boîtier de filtre (42), étant précisé que l'ouverture de sortie débouche respectivement dans un conduit d'impulsion (25, 26) qui est dirigé vers l'intérieur de la chambre de filtre (38, 39).

7. Aspirateur de saletés avec un nettoyage de filtre selon l'une des revendications 1 à 6, **caractérisé en ce qu'**un servomoteur (36) sert d'entraînement de pivotement pour le clapet en Y (9).

8. Aspirateur de saletés avec un nettoyage de filtre selon l'une des revendications 1 à 7, **caractérisé en ce que** l'amenée d'air du boîtier de chambre (42) vers l'espace de surpression (24) est apte à être fermée par un clapet à impulsion (27) dont la course est commandée par un aimant de levage (18).

9. Aspirateur de saletés avec un nettoyage de filtre selon l'une des revendications 1 à 7, **caractérisé en ce que** le palier de pivotement pour le clapet en Y (9) est disposé sur le boîtier de chambre (42).
